# EUROPEAN PATENT SPECIFICATION

(11) **EP 0 767 527 B1**
(45) Date of publication and mention of the grant of the patent: **03.03.1999**
(21) Application number: 96307125.3
(22) Date of filing: 27.09.1996
(51) Int. Cl.: H02K 13/00, H01R 39/48, H01R 39/56

(54) **Miniature electric motor**
Elektrischer Kleinmotor
Moteur électrique miniature

(30) Priority: 07.10.1995 JP 286586/95
(43) Date of publication of application: 09.04.1997
(73) Proprietor: MABUCHI MOTOR CO., LTD, Matsudo-shi, Chiba-ken (JP)
(72) Inventor: Yoshimura, Kazutoshi, c/o Mabuchi Motor Co., Ltd., Motono-Son, Inba-Gun, Chiba-Ken (JP); Shibuya, Isao, c/o Mabuchi Motor Co., Ltd., Motono-Son, Inba-Gun, Chiba-Ken (JP); Harano, Junichi, c/o Mabuchi Motor Co., Ltd., Motono-Son, Inba-Gun, Chiba-Ken (JP); Ebihara, Hideaki, c/o Mabuchi Motor Co., Ltd., Motono-Son, Inba-Gun, Chiba-Ken (JP)
(74) Representative: Smart, Peter John

(56) References cited:
- EP-A- 0 209 617
- GB-A- 2 005 483
- PATENT ABSTRACTS OF JAPAN vol. 95, no. 005 & JP 07 115754 A (MABUCHI MOTOR CO LTD), 2 May 1995,

## Description

### BACKGROUND OF THE INVENTION

### Field of the Invention

The present invention relates to a miniature electric motor according to claim 1 and, more particularly to a miniature electric motor used for optical precision equipment, such as compact cameras, audio visual equipment, such as compact disc (CD) players, office automation (OA) equipment, such as copiers, domestic electric equipment, such as hair driers, automotive electric equipment, and a toy and the like. The invention includes the use of a selected lubricant in an electric motor according to claim 13 and motors containing such lubricants according to claims 1 and 12.

### Description of the Related Art

Miniature electric motors have been widely used in various fields in addition to the above-described equipments. There are demands that the miniature motors are made smaller in size, lighter in weight, thinner, its motor performance is more stabilized, and a service life of the motor is more prolonged.

In a miniature electric motor, permanent magnets are mounted on an inner circumferential surface of a casing and a rotor is disposed inside the permanent magnets. A rotary shaft of the rotor is rotatably supported by bearing units mounted on the casing. Commutator of the rotor and brushes mounted on the casing are provided inside the casing and are slidingly engaged with each other.

The motor having such an arrangement suffers an abnormal frictional wear problem that the commutator and the brushes are worn out for a short period of time due to an arc discharge (so-called electric sparks) or Joule heat generated at sliding portions where the commutator and the brushes are in sliding contact with each other or due to a metallic contact between the commutator and the brushes.

When such an abnormal frictional wear is generated, it is impossible to maintain a normal electrical connection between the commutator and the brushes. As a result, the desired stability of the motor performance is not ensured and the service life of the motor would be shortened.

Also, if the motor is used in the ambient atmosphere containing an organic gas in the air atmosphere, a black dielectric polymer which is so called "black powder" is gradually adhered to the sliding portion due to the above-explained arc discharge or Joule heat.

Such dielectric polymer makes unstable the contact condition between the commutator and the brushes and increases the contact resistance. As a result, a current value is varied and a rotational speed and a torque are unstable and also the service life of the motor is shortened.

In order to solve this problem, there is proposed in JP-A-07 115 754 a technology that atmospheric constituent agents whose evaporated molecules are adhered to the sliding portion and serve as lubricants are sealed in the interior of the casing so that the interior of the casing is always filled with the atmosphere of the constituents.

For example, there is a conventional technical proposal that polyhydric alcohol such as ethylene glycol is sealed in the interior of the casing to always keep the casing interior being in the atmosphere of the polyhydric alcohol. In this case, however, it is not always sufficient to suppress the adhesion of the dielectric polymer or the abnormal wear generated in the above-described sliding portion.

### SUMMARY OF THE INVENTION

In order to solve the above-noted defects, an object of the present invention is to provide a miniature electric motor wherein a contact resistance of each sliding portion between commutator and brushes within an interior of a casing is reduced to stabilize the motor performance.

Also, another object of the present invention is to provide a miniature electric motor which has a long service life by suppressing any wear of the sliding portion.

In order to attain these and other objects, according to the present invention, there is provided a miniature electric motor wherein permanent magnets are mounted on an inner circumferential surface of a casing, a rotor is rotatably supported in an interior of the casing, and commutator of the rotor and brushes mounted on the casing are provided in the interior of the casing and in sliding engagement with each other.

Atmospheric constituent agents are sealed in the interior of the casing and the atmospheric constituent agents include at least one kind of diester carbonate having at least one bond given as follows in a molecular formula:

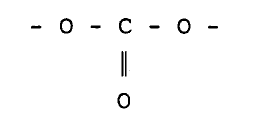

Preferably, the diester carbonate is represented by a following general formula: 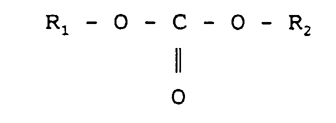 where the group R₁ and the group R₂ in the general formula are different or the same and represent either one of an alkyl group or an alkenyl group whose number of carbon atoms is in a range of 1 to 30, respectively.

For example, the groups R₁ and R₂ in the general formula are selected from the group consisting essentially of a normal alkyl group, a normal alkenyl group, a chain branching alkyl group, a chain branching alkenyl group, a cycloalkyl group and an alkylating cycloalkyl group.

For example, the normal alkyl group is selected from the group essentially consisting of a methyl group, an ethyl group, a propyl group, a butyl group, a pentyl group, a hexyl group, a heptyl group, an octyl group, a nonyl group, a decyl group, a dodecyl group, a tetradecyl group (myristyl group), a hexadecyl group (cetyl group), an octadecyl group (stearyl group), an icosanyl group (eicosanyl group) and a triacontanyl group.

For example, the normal alkenyl group is selected from the group essentially consisting of a decenyl group and an octadecenyl group.

For example, the chain branching alkyl group is selected from the group essentially consisting of an isopropyl group, an isobutyl group, an isopentyl group, an isohexyl group, an isoheptyl group, an isooctyl group, an isononyl group, an isodecyl group, an isododecyl group, an isotetradecyl group (isomyristyl group), an isohexadecyl group (isocetyl group), an isooctadecyl group (isostearyl group), an isoicosanyl (isoeicosanyl) group and an isotriacontanyl group.

For example, the chain branching alkenyl group is selected from the group essentially consisting of an isodecenyl group and an isooctadecenyl group. The cycloalkyl group is a cyclohexyl group and the alkylating cycloalkyl group is a 4-methylcyclohexyl group.

Preferably, the groups R₁ and R₂ in the above-descried general formula may be the same or may be different from each other and represents any one of a butyl group, an isononyl group and isostearyl group, respectively. For example, it is possible to select at least one kind from the group dibutyl carbonate, the diisononyl carbonate and the diisostearyl carbonate as the atmospheric constituent agents.

The evaporated moleculars generated by gradual evaporation of the atmospheric constituent agents within the interior of the casing are adhered to sliding portions where the commutator is engaged with the brushes, whereby either one or both of a monomolecular film and a multiple molecular film made of the evaporated moleculars are formed on a surface of the sliding portions.

It is preferable that the atmospheric constituent agents are injected into gap portions between the permanent magnets and the inner circumferential surface of the casing, whereby the atmospheric constituent agents are sealed in the interior of the casing.

More specifically, fine corrugations are present on an outer circumferential surface of at least one permanent magnet and the inner circumferential surface of the casing, whereby the fine gap portions are formed between the outer circumferential surfaces of the permanent magnets and the inner circumferential surface of the casing; the atmospheric constituent agents are injected into the gap portions, whereby the atmospheric constituent agents are diffused in the gap portions by a capillary action and stored in the gap portions; and a distance of the fine gap portions is suitably determined in accordance with a size of the permanent magnets, an injection amount of the atmospheric constituent agents, a viscosity and a molecular weight of the atmospheric constituent agents.

The atmospheric constituent agents may be impregnated into porous material, and the porous material is located at any place of the interior of the casing, whereby the space of the interior of the casing is kept as an atmosphere of the atmospheric constituent agents. The porous material may be selected from the group essentially consisting of an absorbent cotton, a felt and a sponge.

One of the impregnation, the adhesion, the adsorption, the permeation and the mixture of the atmospheric constituent agents is effected at least one of the components of the permanent magnets, the casing, the rotor, the commutator, the brushes, and bearing units for supporting the rotor, whereby the space of the interior of the casing is kept as an atmosphere for the atmospheric constituent agents.

The atmospheric constituent agents may be inserted or permeated in a gap portion between at least two of the components selected from the permanent magnets, the casing, the rotor, the commutator, the brushes, and bearing units for supporting the rotor, whereby the space of the interior of the casing is kept as an atmosphere for the atmospheric constituent agents.

The atmospheric constituent agents may be directly coated to the sliding portion where the brushes are in sliding contact with the commutator, whereby the space of the interior of the casing is kept as an atmosphere for the atmospheric constituent agents.

It is preferable that the interior of the casing is tightly sealed so that the atmospheric constituent agents are not leaked away from the sealed interior of the casing to an outside of the motor.

It is preferable that evaporated moleculars generated by the gradual evaporation of the atmospheric constituent agents are adsorbed to the sliding portions where the commutator is in sliding engagement with the brushes, and the evaporated moleculars serve as lubricants, whereby any abnormal wear of the sliding portions and the generation and the adhesion of a dielectric polymer at the sliding portions are prevented by the lubricating effect of the evaporated molecules.

According to another aspect of the present invention, there is provided a miniature electric motor wherein permanent magnets are mounted on an inner circumferential surface of a casing, a rotor is rotatably supported in an interior of the casing, and a commutator of the rotor and brushes mounted on the casing are provided in the interior of the casing and in sliding engagement with each other,
wherein atmospheric constituent agents selected as at least one kind from the group essentially consisting of a dibutyl carbonate, a diisononyl carbonate and a diisostearyl carbonate are injected into fine gap portions between an outer circumferential surface of at least one permanent magnet and an inner circumferential surface of the casing, whereby the atmospheric constituent agents are diffused by the capillary action within the gap portions and stored in the gap portions;
the interior of the casing is tightly sealed so that the atmospheric constituent agents are prevented from leaking away from the sealed interior of the casing to an outside of the motor;
the evaporated moleculars generated by the gradual evaporation of the atmospheric constituent agents are adsorbed to the sliding portions where the commutator is in sliding engagement with the brushes, and the evaporated moleculars serve as lubricants; and
by the lubricating effect of the evaporated moleculars, any abnormal wear of the sliding portions and the generation and the adhesion of a dielectric polymer at the sliding portions may be prevented.

With such an arrangement according to the present invention, the contact resistance at the sliding portions where the commutator and brushes are in sliding engagement with each other inside the casing is reduced to stabilize the motor performance. Also, the wear at the sliding portions is suppressed to prolong the service life of the motor.

### BRIEF DESCRIPTION OF THE DRAWINGS

In the accompanying drawings:
Fig. 1 is a perspective view showing a miniature electric motor according to one embodiment of the present invention;
Fig. 2 is a fragmentary frontal view showing the motor and one side of the motor is sectionally shown;
Fig. 3 is a sectional view showing a state where atmospheric constituent agents are injected;
Fig. 4 is a cross-sectional view taken along the line IV-IV of Fig. 3;
Fig. 5 is a graph showing an operational mode of a miniature electric motor in accordance with an embodiment of the present invention;
Fig. 6 is a graph showing an average value of a wear amount of the commutator in accordance with the embodiment; and
Fig. 7 is a graph showing a test about the contact stability of the motor.

### DESCRIPTION OF THE PREFERRED EMBODIMENTS

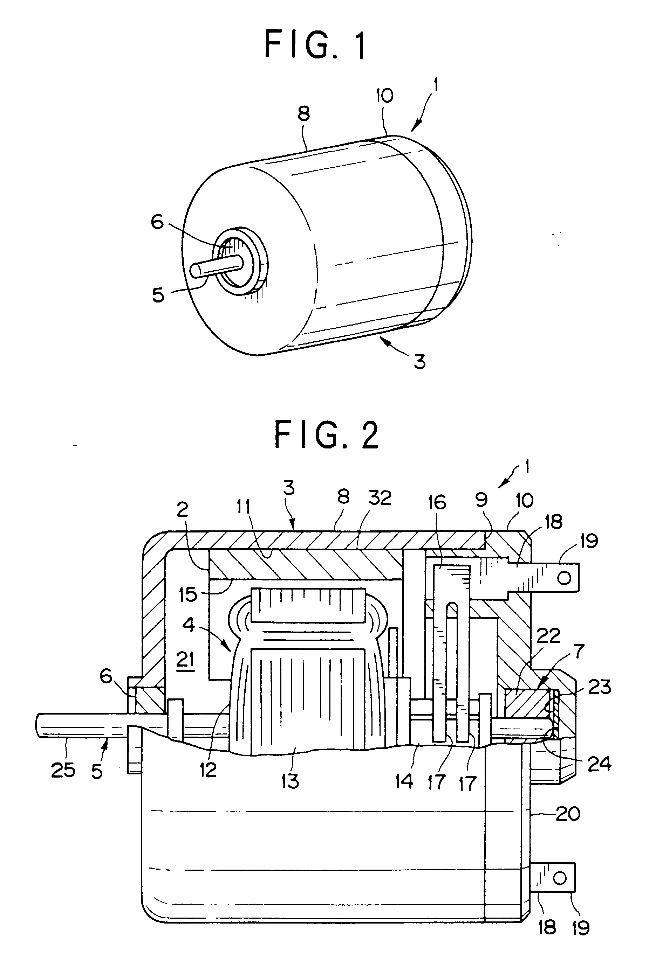

An embodiment of the present invention will now be described with reference to Figs. 1 through 4.

An overall structure of a miniature electric motor in accordance with the present invention will now be described on the basis of Figs. 1 and 2. Fig. 1 is a perspective view showing the miniature electric motor and Fig. 2 is a fragmentary frontal view showing the motor and one side of the motor is sectionally shown.

As shown in Figs. 1 and 2, the miniature electric motor 1 is provided with a casing 3 with permanent magnets 2 mounted on its inner circumferential surface, and a rotor 4 arranged in the interior of the casing 3. A rotary shaft 5 of the rotor 4 is rotatably supported by bearing units 6 and 7 provided in the casing 3.

The casing 3 is provided with a housing 8 and a cover member 10. The housing 8 is made of metal material such as a cold-pressed steel plate mainly consisting of, for example, soft steel and is shaped in the form of a bottomed hollow cylindrical shape. The cover member 10 is engaged with an opening portion 9 of the housing 8 and is made of, for example, resin material or any other dielectric material.

A pair of permanent magnets 2 are fixed to an inner cylindrical circumferential surface 11 of the housing (i.e., casing inner circumferential surface) to face each other. For example, the permanent magnets 2 are made of magnetic material such as rubber magnet, plastic magnet or sintered magnet and are shaped in the form of a ring shape or an arcuate segment shape.

The rotor 4 is provided with the rotary shaft 5 extending axially along a center axis which serves as a rotary centerline, a core 13 which is mounted on the rotary shaft 5 and obtained by winding armature wire 12 in a coil shape, and a commutator 14 which is mounted on the rotary shaft 5 and electrically connected to the armature wire 12. The core 13 is arranged inside of inner circumferential surfaces 15 of the permanent magnets 2 at a predetermined air-gap relative to the inner circumferential surfaces 15 of the permanent magnets 2.

The cover member 10 is provided with a plurality of sets of brushes (for example, two sets of brushes) 16 made of conductive material. The commutator 14 which is rotating is in sliding contact with the brushes 16 at the sliding portions 17 for allowing the current to flow.

A plurality of input terminals (for example, two input terminals) 18 each connected electrically to the brushes 16 are mounted on the cover member 10. Each end portion 19 of each input terminal 18 is arranged to project outside of an outer surface 20 of the cover member 10.

The commutator 14 of the rotor 4 and the brushes 16 mounted on the casing 3 are disposed in the casing interior 21 surrounded by the housing 8 and the cover member 10.

A radial bearing 22 of the bearing unit 7 rotatably supports the rotor 5. A thrust bearing 23 thereof supports the rotor 5 in the thrust direction. The thrust bearing 23 is made of a circular metal plate and is securely fixed in a bearing receiving portion 24 by pressing or the like.

Thus, in the motor 1, the permanent magnets 2 are mounted on the inner circumferential surface 11 of the casing 3 and the rotor 4 is rotatably supported in the interior 21 of the casing 3. The commutator 14 of the rotor 4 and the brushes 16 mounted on the casing 3 are in sliding contact with each other at the sliding portions 17 within the casing interior 21.

In the motor 1 with such an arrangement, when an electric current is caused to flow through the brushes 16 and the commutator 14 from the input terminal 18 connected to an outside direct current (DC) power source (not shown), a torque is given to the rotor 4 located in a magnetic field formed by the pair of permanent magnets 2 to thereby cause the rotor 4 to take a rotational motion.

As a result, the motor 1 drives the optical precision equipment (not shown) or the like through an output portion 25 of the rotary shaft 5 which is rotating.

By the way, according to the present invention, atmospheric constituent agents 30 is injected into a gap between the permanent magnets 2 and the inner circumferential surface 11 of the housing so that the atmospheric constituent agents 30 are sealed within the casing interior 21.

Evaporated moleculars generated by the gradual vaporization of the atmospheric constituent agents 30 are adsorbed onto the sliding portions 17 where the commutator 14 is in sliding engagement with the brushes 16, and the evaporated moleculars serve as lubricants. The lubricating effect of the evaporated moleculars prevents any abnormal wear or the generation and adhesion of the dielectric polymer at the sliding portions 17.

The structure of the permanent magnets 2 and the injection of the atmospheric constituent agents 30 into the casing interior 21 will now be described.

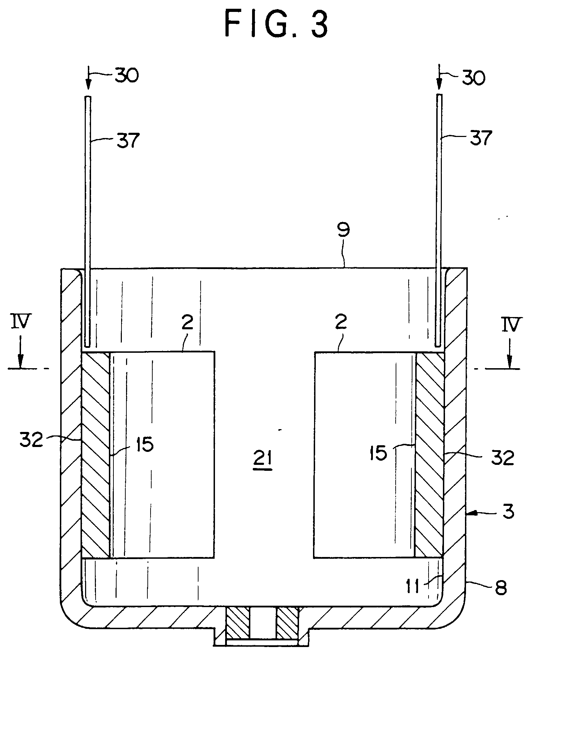

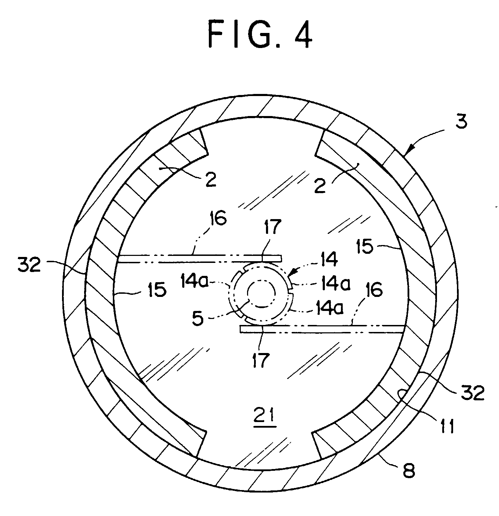

Fig. 3 is a sectional view showing a state where the atmospheric constituent agents are injected. Fig. 4 is a cross-sectional view taken along the line IV-IV of Fig. 3. As shown in Figs. 3 and 4, since the outer circumferential surface 32 of each permanent magnet is in contact with the inner circumferential surface 11 of the casing, the outer circumferential surface 32 has a cross-sectional shape having substantially the same radius of curvature as that of the inner circumferential surface 11 of the casing.

Since fine or minute corrugations are formed on the outer circumferential surface 32 of the permanent magnet and the inner circumferential surface 11 of the casing, fine or minute gap or pit portions are present between these surfaces 32 and 11. When the atmospheric constituent agents 30 are injected into the gap portions, the atmospheric constituent agents 30 are diffused by a capillary action and stored in the gap portions. A distance of the fine gap portions is suitably determined in accordance with a size of the permanent magnets 2, an injection amount of the atmospheric constituent agents 30, viscosity thereof and molecular weights thereof.

The atmospheric constituent agents 30 which have been thus injected are evaporated gradually to become evaporated moleculars. As a result, the evaporated moleculars adhere to the sliding portions 17 between the commutator 14 and the brushes 16 and serve as lubricants.

As shown in Fig. 3, first of all in the injection step order, the opening portion 9 of the housing 8 is directed upwardly and the permanent magnets 2 are mounted on the inner circumferential surface 11 of the housing 8. Under this condition, a tip end portion of each syringe 37 for an injection is moved close to the gap portions between the casing inner circumferential surface 11 and the permanent magnet outer circumferential surface 32.

Next, the atmospheric constituent agents 30 are injected into the gap portions through the syringes 37 for the injection. The injected atmospheric constituent agents 30 are rapidly diffused through the fine gap portions by the capillary action and stored in the gap portions. Upon the completion of the injection, the syringes 37 for the injection are pulled away.

After the assembly of the motor 1, when the rotor 4 takes the rotational motion, as shown in Fig. 4, the commutator 14 rotates into sliding contact with the brushes 16 at the sliding portions 17.

On the other hand, the atmospheric constituent agents 30 which have been diffused in the gap portions are gradually evaporated to become the evaporated moleculars. The small amount of evaporated moleculars always adhere to the sliding portions 17 to serve as lubricants.

The lubricating effect of the evaporated moleculars prevents the abnormal wear of the sliding portions 17 and the generation and the adhesion of the dielectric polymer at the sliding portions 17. As a result, the contact condition between the commutator 14 and the brushes 16 may be stabilized.

As a result, the contact resistance of the brushes 16 at the sliding portions 17 is not increased, and the electric current value is not varied. Accordingly, it is possible to realize the stabilization of the motor performance and to prolong the service life of the motor.

Incidentally, it is possible to use other means for keeping the space of the casing interior 21 as the atmosphere of the atmospheric constituent agents. For example, the atmospheric constituent agents 30 are impregnated into a porous material such as an absorbent cotton, a felt, a sponge, and the porous material is located at any place of the casing interior 21.

Further, for another means, the impregnation, the adhesion, the adsorption, the permeation and the mixture of the atmospheric constituent agents 30 may be effected at least one of the components, such as the permanent magnets 2, the casing 3, the rotor 4, the commutator 14, the brushes 16, the brush arms (not shown), the cover member 10, the bearing units 6 and 7 for supporting the rotor 4 and the bearing oil.

Moreover, for still another means for keeping the space of the casing interior 21 as the atmospheric atmosphere of the atmospheric constituent agents 30, the atmospheric constituent agents 30 are inserted or permeated into the space between the two components selected from the permanent magnets 2, the casing 3, the rotor 4, the commutator 14, the brushes 16, the brush arms (not shown) and the bearing units 6 and 7.

Namely, any means may be used if the sliding portions 17 are surrounded by the atmospheric constituent agents 30.

The detail of the atmospheric constituent agents 30 will now be described.

In the embodiment, the atmospheric constituent agents 30 are filled in the casing interior 21. The atmospheric constituent agents 30 are composed of one kind or plural kinds of diester carbonates including the following single or plural bonds in a molecular formula.

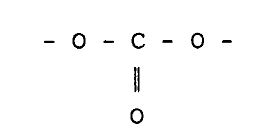

The atmospheric constituent agents 30 are gradually evaporated to become evaporated moleculars within the casing interior 21. The evaporated moleculars are adhered to the sliding portions 17 where the commutator 14 is in sliding contact with the brushes 16. As a result, the lubricating effect may be attained by forming either one or both of a monomolecular film and a multiple molecular film made of the above-described evaporated molecular or moleculars on the surface of the sliding portions 17.

It should be noted that the "monomolecular film" means the condition that the evaporated moleculars form a film where the evaporated moleculars are arranged without overlap on the surface of the sliding portions 17. The "multiple molecular film" means the condition that the evaporated moleculars form a film where the evaporated moleculars are overlapped with each other on the surface of the sliding portions 17.

The diester carbonates are represented by the following general formula. 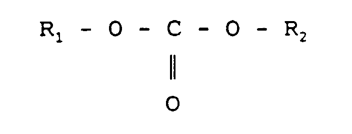 where the R₁ and R₂ in the general formula represent groups which are different from each other or the same and represent either one of an alkyl group or an alkenyl group whose number of carbon atoms is in a range of 1 to 30, respectively.

The R₁ and R₂ in the general formula represent groups one of which is selected from, for example, a normal alkyl group or a normal alkenyl group, a chain branching alkyl group or a chain branching alkenyl group, a cycloalkyl group and an alkylating cycloalkyl group.

The normal alkyl group includes, for example, a methyl group (CH₃-), an ethyl group (C₂H₅-), a propyl group (C₃H₇-), a butyl group (C₄H₉-), a pentyl group (C₅H₁₁-), a hexyl group (C₆H₁₃-), a heptyl group (C₇H₁₅-), an octyl group (C₈H₁₇-), a nonyl group (C₉H₁₉-), a decyl group (C₁₀H₂₁-), a dodecyl group (C₁₂H₂₅-), a tetradecyl group (myristyl group) (C₁₄H₂₉-), a hexadecyl group (cetyl group) (C₁₆H₃₃-), an octadecyl group (stearyl group) (C₁₈H₃₇-), an icosanyl group (eicosanyl group) (C₂₀H₄₁-), a triacontanyl group (C₃₀H₆₁-), and the like. The normal alkenyl group includes, for example, a decenyl group (C₁₀H₁₉-), an octadecenyl group (oleyl group) (C₁₈H₃₅-), and the like.

The chain branching alkyl group includes, for example, an isopropyl group (C₃H₇-), an isobutyl group (C₄H₉-), an isopentyl group (C₅H₁₁-), an isohexyl group (C₆H₁₃-), an isoheptyl group (C₇H₁₅-), an isooctyl group (C₈H₁₇-), an isononyl group (C₉H₁₉-), an isodecyl group (C₁₀H₂₁-), an isododecyl group (C₁₂H₂₅-), an isotetradecyl group (isomyristyl group) (C₁₄H₂₉-), an isohexadecyl group (isocetyl group) (C₁₆H₃₃-), an isooctadecyl group (isostearyl group) (C₁₈H₃₇-), an isoicosanyl group (isoeicosanyl group) (C₂₀H₄₁-), an isotriacontanyl group (C₃₀H₆₁-), and the like.

The chain branching alkenyl group includes, for example, an isodecenyl group (C₁₀H₁₉-), an isooctadecenyl group (isooleyl group) (C₁₈H₃₅-), and the like.

Also, the cycloalkyl group may include, for example, a cyclohexyl group. The alkylating cycloalkyl group may include, for example, a 4-methylcyclohexyl group.

The examples of the groups R₁ and R₂ in the general formula of the diester carbonate are not limited to those listed above. According to the present invention, the atmospheric constituent agents are not limited to the specific ones if the agents are made of one or two kinds of the diester carbonate including one or plural bonds in the following formula.

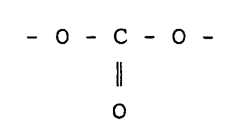

Incidentally, it is preferable that the groups R₁ and R₂ in the general formula may be different or may be the same and may include the butyl group, the isononyl group and the isostearyl group, respectively.

The atmospheric constituent agents composed of the above-described material are gradually evaporated, and the evaporated moleculars are adsorbed to the sliding portions 17 to serve as lubricants. The lubricating effect of the evaporated moleculars may prevent the abnormal wear of the sliding portions 17 or the generation and adhesion of the dielectric polymer at the sliding portions 17.

The above-described atmospheric constituent agents are hardly decomposed or oxidized, and are stable to light and heat, and are superior in durability and in aging resistance. Also, the above-described atmospheric constituent agents are the substances having the dielectric property. The evaporated moleculars constitutes either one or both of the monomolecular film and the multiple molecular film on the surface to which the evaporated moleculars are adsorbed. However, these films do not adversely affect the flow of current due to a tunnel effect.

Accordingly, it is possible to realize the stability in a current waveform of the motor and the stability of the contact resistance between the commutator 14 and the brushes 16.

Thus, the sliding portions 17 are protected by either one or both of the monomolecular film and the multiple molecular film composed of evaporated moleculars of the atmospheric constituent agents 30.

Thus, the initial wear generated in the sliding portions 17 may be avoided by the lubricating effect of the above-described molecular film. It is possible to prevent the generation of the dielectric polymer at the sliding portions 17 in the atmosphere including the organic gas. Accordingly, it is possible to reduce and stabilize the contact resistance at the sliding portions 17 and to realize the prolongation of the service life of the motor and the stabilization of the motor performance.

Incidentally, in some cases, it is possible to coat the atmospheric constituent agents according to the present invention directly to the sliding portions 17 for keeping the space of the casing interior 21 in the atmospheric atmosphere of the atmospheric constituent agents. In those cases, it is preferable to coat them as thin as possible.

Also, the casing interior 21 of the motor 1 is gas-tightly and fluid-tightly sealed so that hermetic or sealing property is enhanced and the atmospheric constituent agents in the casing interior are prevented from leaking away to the outside of the motor. Thus, it is possible to enjoy the above-described effects.

### Examples

Examples of the present invention will now be described.

It is preferable that the above-described atmospheric constituent agents 30 are formed of one kind or more kinds of a dibutyl carbonate, a diisononyl carbonate and a diisostearyl carbonate.

A rational formula of the dibutyl carbonate is as follows:

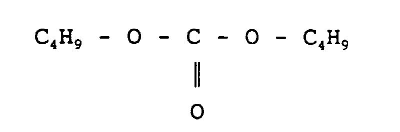

A rational formula of the diisononyl carbonate is as follows:

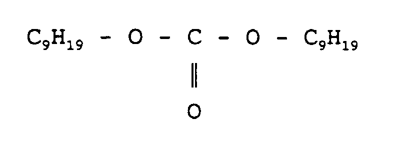

A rational formula of the diisostearyl carbonate is as follows:

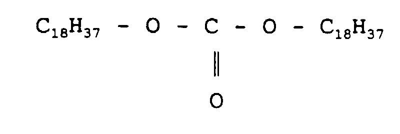

According to the examples, three kinds of the above-described substances that were different in alkyl group out of the diester carbonates were used in the tests. Example 1 (EX. 1) was that the dibutyl carbonate out of the diester carbonates was injected into the gap portions between the permanent magnets 2 and the inner circumferential surface 11 of the housing. Example 2 (EX. 2) was that the diisononyl carbonate was injected thereinto. Example 3 (EX. 3) was that the diisostearyl carbonate was injected thereinto.

Thus, the miniature electric motors in which the space of the casing interior 21 was the atmosphere of each diester carbonate were prepared for the tests for the Examples 1, 2 and 3.

As comparison examples, Comparison 1 (COM. 1) was that no atmospheric adjustment within the interior of the motor was effected, i.e., the casing interior space was filled with regular atmosphere (ATM). Comparison 2 (COM. 2) was that ethylene glycol being one of polyhydric alcohols was filled in the casing interior.

In order to suppress the generation of gas from the motor components, in each test motor, ferrite magnet was used for the permanent magnets 2.

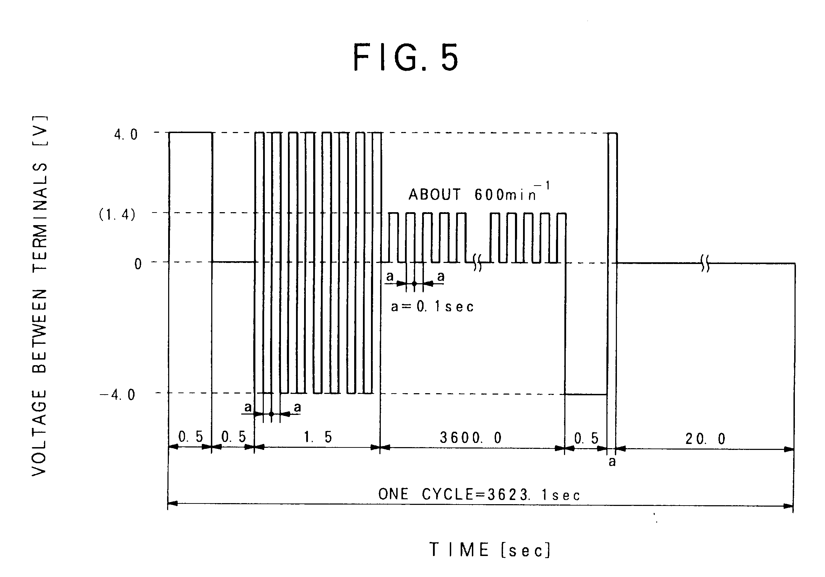

Fig. 5 shows the operational mode of the miniature electric motor 1 according to the embodiment, the lateral axis denotes time (seconds) and the vertical axis denotes the interval voltage (V) between terminals of the motor. This operational mode is directed to the severe condition that is similar to the actual use condition of the motor in order to test the durability or the like of the motor.

As shown in Fig. 5, one cycle of this operational mode is defined by applying the voltage to the motor in the order of, first, +4V for 0.5 seconds, next, 0V for 0.5 seconds, next, the repetition of the voltages for 1.5 seconds, at +4V and -4V for every 0.1 seconds, next, the repetition of the voltages for 3,600 seconds, at +1.4V and 0V for every 0.1 seconds at the number of revolutions (RPM) of about 600 [min⁻¹], next, -4V for 0.5 seconds, next, +4V for 0.1 seconds, finally, 0V for 20 seconds. One cycle is 3,623.1 seconds.

The cyclic tests for rotating the motor in accordance with this operational mode were repeated for 96 hours. The other conditions were given as follows:
Test Conditions
Rated voltage of motor: 2V
Rated output of motor: about 0.16W
Actual load: compact disc (CD) having a diameter of 12cm
Ambient temperature: 70°C
Relative humidity: about 4% to about 7%
Rotational direction: clockwise
Operational time: 96 hours

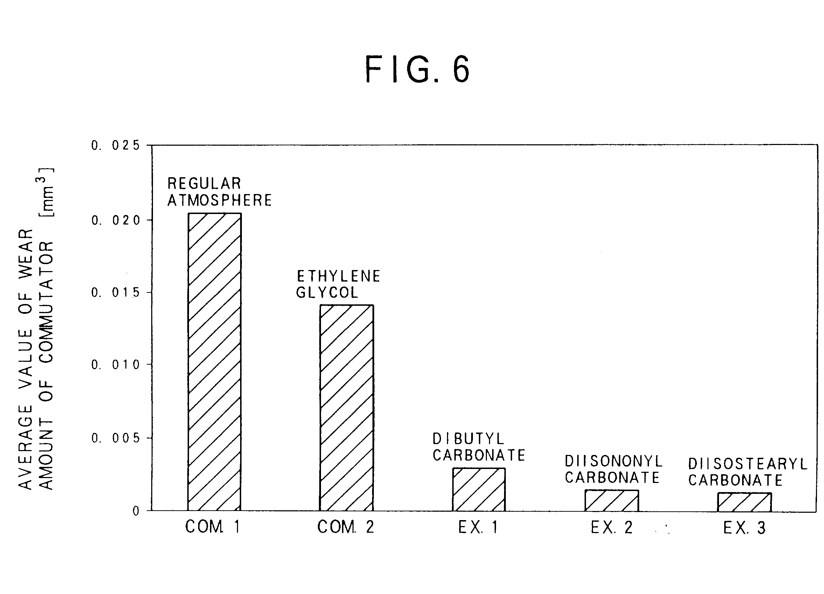

Following Table 1 shows the measurement result and the average value of the wear amount of the commutator 14 after the repetition of the cyclic tests for 96 hours in the case where each motor was rotated clockwise in accordance with the Examples 1, 2 and 3 (EX. 1 to 3) and the Comparisons 1 and 2 (COM. 1 and 2). The wear amount of the commutator 14 was represented in terms of wear amount volume [mm³]. Fig. 6 is a graph showing the average values of the wear amount of the commutator indicated in Table 1.

**TABLE 1**

| | ATMOSPHERE | AVERAGE [mm³] | MOTOR NO. | WEAR AMOUNT [mm³] |
|---|---|---|---|---|
| COM. 1 | REGULAR ATMOSPHERE | 0. 02057 | 1 | 0. 01222 |
| | | | 2 | 0. 01856 |
| | | | 3 | 0. 0174 |
| | | | 4 | 0. 02118 |
| | | | 5 | 0. 02806 |
| | | | 6 | 0. 01642 |
| | | | 7 | 0. 01874 |
| | | | 8 | 0. 01322 |
| | | | 9 | 0. 01738 |
| | | | 10 | 0. 01268 |
| | | | 11 | 0. 023 |
| | | | 12 | 0. 03468 |
| | | | 13 | 0. 02602 |
| | | | 14 | 0. 02848 |
| COM. 2 | ETHYLENE GLYCOL | 0. 01411 | 1 | 0. 01175 |
| | | | 2 | 0. 00731 |
| | | | 3 | 0. 01425 |
| | | | 4 | 0. 01276 |
| | | | 5 | 0. 0245 |
| EX.1 | DIBUTYL CARBONATE | 0. 00303 | 1 | 0. 00231 |
| | | | 2 | 0. 00179 |
| | | | 3 | 0. 00159 |
| | | | 4 | 0. 00282 |
| | | | 5 | 0. 00826 |
| | | | 6 | 0. 00142 |
| EX.2 | DIISONONYL CARBONATE | 0. 00145 | 1 | 0. 00158 |
| | | | 2 | 0. 00141 |
| | | | 3 | 0. 00137 |
| | | | 4 | 0. 00131 |
| | | | 5 | 0. 00148 |
| | | | 6 | 0. 00153 |
| | | | 7 | 0. 00148 |
| | | | 8 | 0. 00143 |
| | | | 9 | 0. 00142 |
| | | | 10 | 0. 00148 |
| EX. 3 | DIISOSTEARYL CARBONATE | 0. 00130 | 1 | 0. 00109 |
| | | | 2 | 0. 00113 |
| | | | 3 | 0. 00096 |
| | | | 4 | 0. 00122 |
| | | | 5 | 0.00168 |
| | | | 6 | 0. 0017 |

Incidentally, the motor number in Table 1 represents the individual number of the motors which had been tested. Fourteen motors, 5 motors, 6 motors, 10 motors and 6 motors were tested for the Comparisons 1 and 2 and the Examples 1 to 3, respectively.

As it is apparent from Table 1 and Fig. 6, the initial abnormal wear was generated in the commutator in the Comparison 1 (COM. 1) where the inner atmosphere of the motor was not adjusted at all. Although the rotational time period was short for 96 hours in the operation, the wear amount of the commutator was very large.

In the Comparison 2 (COM. 2), it was admitted that the wear amount of the commutator was little bit decreased in comparison with the Comparison 1. The wear amount was about 70% of the Comparison 1. The extent of reduction in wear amount was small.

In contrast, in the Examples 1 to 3 (EX. 1 to EX. 3), the wear amounts were about 15%, about 7% and about 6% of the Comparison 1, respectively. Even in the Example 1 where the wear mount was largest in the three Examples 1 to 3, the wear amount was decreased down to 15% or less in comparison with the Comparison 1.

The wear amounts of the Examples 1, 2 and 3 were largely decreased down to about 21%, about 10% and about 9% in comparison with the Comparison 2.

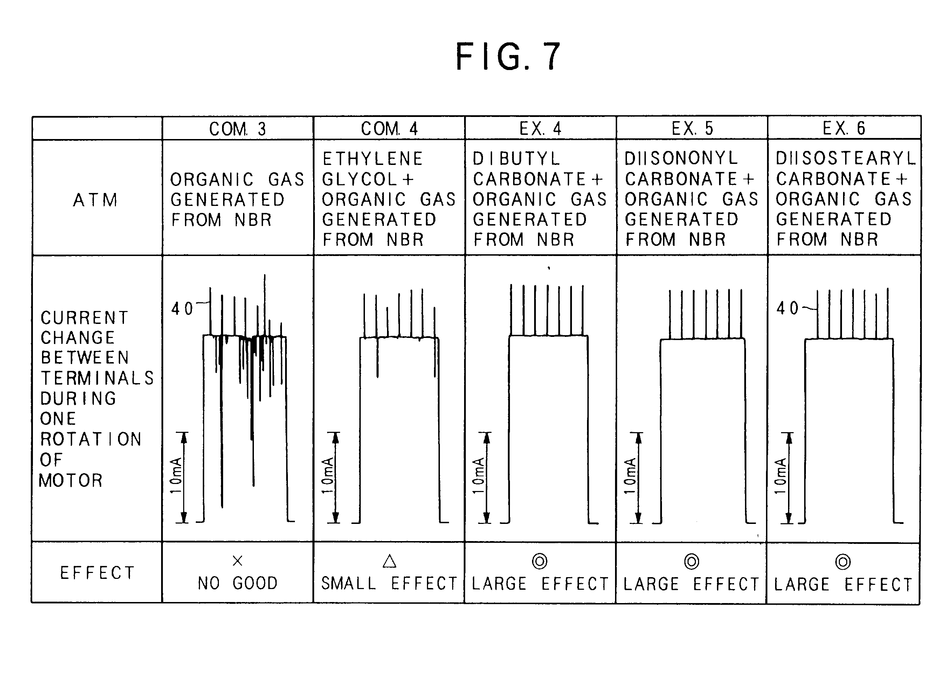

Other embodiments according to the present invention will now be described with reference to Fig. 7.

In these embodiments, rubber magnets (for example, acrylonitrile-butadiene rubber (NBR)) were used as the permanent magnets 2. The dibutyl carbonate (Example 4), the diisononyl carbonate (Example 5) and the diisostearyl carbonate (Example 6) were injected into the gap portions between the housing inner surface 11 and the permanent magnet 2 of each test motor, respectively.

Then, under the following experimental conditions, the space of the casing interior 21 of each motor was kept in the atmosphere in which the organic gas generated from the rubber magnet and the above-described diester carbonate were mixed with each other.

Subsequently, in the Comparisons 3 and 4 (COM. 3 and COM. 4), the atmosphere in the interior of each test motor was set up as follows under the following similar experimental conditions.

More specifically, in the Comparison 3, only the organic gas generated from the rubber magnet (for example, NBR) is used for the atmosphere. In the Comparison 4, the ethylene glycol and the organic gas generated from the rubber magnet are mixed with each other in the atmosphere.

Fig. 7 is a graph showing the results tested about the contact stability of each motor of the Examples 4 though 6 (EX. 4, EX. 5 and EX. 6) and the Comparisons 3 and 4.

The test conditions of the motors are as follows:
Test Conditions
Rated voltage of motor: 2V
Rated output of motor: about 0.16W
Actual load: compact disc having a diameter of 12cm
Operational mode: the operational mode shown in Fig. 5
Ambient environment: 70°C, no humidity control
Rotational direction: clockwise
Operational time: 96 hours

As described above, the cyclic tests were repeated for rotating each motor clockwise for 96 hours. Thereafter, the voltage of 0.2V was applied to each motor.

The output portion 25 of the rotary shaft 5 shown in Figs. 1 and 2 was rotated forcibly at a constant rotational speed of 0.1 [min⁻¹] by an outer drive source.

The change in electric current between the terminals during one turn of the rotor 4 of each motor in this case is shown in Fig. 7. According to this test, it is possible to know the current characteristics of the motor in a more precise manner in comparison with a conventional test method for picking up the current waveform by rotating the motor at a high speed.

The motor resistance is the sum of the internal resistance value of the armature coil 12 and the contact resistance value between the commutator 14 and the brushes 16. The above-described internal resistance of the armature coil of each motor is adjusted to the same value in advance. Accordingly, the reduction of the current value of each motor in Fig. 7 means that the contact resistance value between the commutator 14 and the brushes 16 in the motor resistance is increased by Ohm Law. Namely, the reduction in current value shows the adhesion of foreign matters such as the dielectric polymer or the like to the sliding portion 17.

Incidentally, the portion 40 indicating the change and projecting linearly upwardly out of the current value results from the switch-over of the armature coil 12 due to the rotation of the three commutator pieces 14a of the commutator 14 since the motor 3 is of a three slot and three polarity type. This is the necessary current change.

The adjustment is not effected to the inner atmosphere (ATM) of the motor in the Comparison 3 at all. Therefore, as shown in Fig. 7, the black dielectric polymer is generated in the sliding portion where the commutator and the brushes are in sliding contact with each other due to the affect of the organic gas generated from the rubber magnet made of acrylonitrile-butadiene rubber (NBR). For this reason, the contact resistance between the commutator and the brushes is increased and unstable. As a result, almost dielectric portions are generated on the sliding surface of the commutator.

Next, in the Comparison 4, since the motor internal atmosphere contains the organic gas and ethylene glycol, the increase of the contact resistance is improved in comparison with the Comparison 3. However, in the Comparison 4, since portions having large contact resistances are left, the improvement is not sufficient and the effect of the improvement is not so remarkable.

In contrast, in the Examples 4 through 6 of the present invention, there is no adverse affect of the organic gas, the dielectric polymer which increases the contact resistance at the sliding contact portion 17 is not generated, and the contact resistance between the commutator and the brushes is reduced to stabilize the contact.

As a result, it is confirmed that there is a remarkable effect that the electric characteristics of the motor may be maintained in a stable manner.

Incidentally, the same reference numerals used in the drawings are used to indicate the like or same members or components.

Various details of the invention may be changed without departing from the scope of the invention. Further, the foregoing description of the embodiments according to the present invention is provided for the purpose of illustration only, and not for the purpose of limiting the invention as defined by the appended claims and their equivalents.

## Claims

1. A miniature electric motor wherein a commutator (14) and brushes (16) are in sliding engagement with each other within a motor casing (21),
an at least one atmospheric constituent agent is sealed in the interior (21) of said casing; and characterized in that
said atmospheric constituent agent is a carbonic acid diester containing at least one moiety of the general formula:

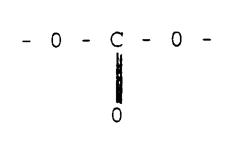

2. A miniature electric motor according to claim 1, wherein said carbonic acid diester is represented by a following general formula: 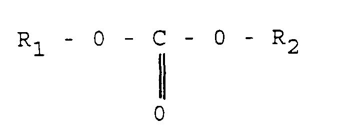 where the groups R₁ and R₂ in the general formula are different or the same and each represent C₁ to C₃₀ alkyl or C₂ to C₃₀ alkenyl.

3. A miniature electric motor according to claim 2, wherein the groups R₁ and R₂ in the general formula are each independently normal alkyl, normal alkenyl, branched alkyl, branched alkenyl, cycloalkyl or alkylcycloalkyl.

4. A miniature electric motor according to claim 3, wherein the or each said normal or branched alkyl group is methyl, ethyl, propyl, butyl, pentyl, hexyl, heptyl, octyl, nonyl, decyl, dodecyl, tetradecyl, hexadecyl, octadecyl, icosanyl or triacontanyl, the or each normal or branched alkeynyl group is decenyl or octadecenyl, the or each cycloaklyl group is a cyclohexyl and the or each alkylcycloakyl group is 4-methylcyclohexyl.

5. A miniature electric motor according to claim 1, wherein said diester carbonate is represented by the following general formula: 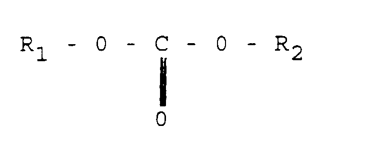 where the groups R₁ and R₂ in the general formula are different or the same and each represent a butyl group, an isononyl group or an isostearyl group.

6. A miniature electric motor according to claim 1, wherein the atmospheric constituent agent or agents include at least one of dibutyl carbonate, diisononyl carbonate or diisostearyl carbonate.

7. A miniature electric motor as claimed in any preceding claim, wherein permanent magnets (2) are mounted on a inner circumferential surface (11) of a casing (3), a rotor (4) is rotatably supported in an interior (21) of said casing, and said rotor comprises said commutator (14) and said brushes (16) are mounted on said casing (3).

8. A miniature electric motor according to claim 7, wherein the atmospheric constituent agent or agents (30) are injected into gap portions between said permanent magnets (2) and said inner circumferential surface (11) of the casing, whereby the atmospheric constituent agent or agents (30) are sealed in the interior (21) of the casing.

9. A miniature electric motor according to claim 7 or claim 8, wherein the atmospheric constituent agent or agents (30) are impregnated into porous material, and the porous material is located at any place of the interior (21) of the casing, whereby an atmosphere of the atmospheric constituent agent or agents is kept in the interior (21) of the casing.

10. A miniature electric motor according to any of claims 7 to 9, wherein the atmospheric constituent agent or agents are inserted or permeated in a gap portion between at least two components selected from the permanent magnets (2), the casing (3), the rotor (4), the commutator (14), the brushes (16), and bearing units (6 and 7) for supporting the rotor (4), whereby an atmosphere of the atmospheric constituent agent or agents is kept in the interior (21) of the casing.

11. A miniature electric motor according to any one of claims 7 to 9, wherein the atmospheric constituent agent or agents (30) are directly coated to a sliding portion (17) where the brushes (16) are in sliding contact with the commutator (14), whereby the space of the interior (21) of the casing is kept as an atmosphere for the atmospheric constituent agents.

12. An electric motor containing as a lubricant a carbonic acid diester containing at least one moiety of the general formula:

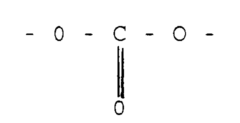

13. The use as a lubricant in an electric motor of a carbonic acid diester containing at least one moiety of the general formula:

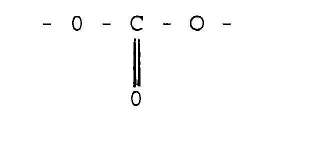

## Patentansprüche

1. Miniatur-Elektromotor, bei welchem ein Kommutator (14) und Bürsten (16) in einem Motorgehäuse (21) miteinander in gleitendem Eingriff sind,
mindestens ein atmosphärischer Bestandteil im Inneren (21) des Gehäuses abgeschlossen ist; und dadurch gekennzeichnet,
daß der atmosphärische Bestandteil ein Kohlensäurediester ist, der mindestens einen Molekülanteil der folgenden allgemeinen Formel enthält:

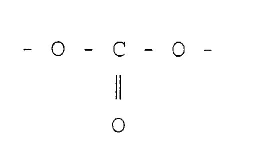

2. Miniatur-Elektromotor nach Anspruch 1, wobei der Kohlensäurediester durch folgende allgemeine Formel dargestellt ist: 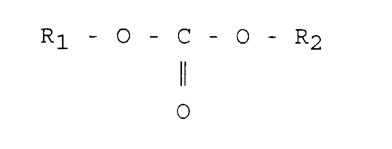 wobei die Gruppen R₁ und R₂ in der allgemeinen Formel unterschiedlich oder gleich sind und jeweils C₁ bis C₃₀ Alkyl oder C₂ bis C₃₀ Alkenyl darstellen.

3. Miniatur-Elektromotor nach Anspruch 2, wobei die Gruppen R₁ und R₂ in der allgemeinen Formel jeweils unabhängig voneinander normales Alkyl, normales Alkenyl, verzweigtes Alkyl, verzweigtes Alkenyl, Cycloalkyl oder Alkylcycloalkyl sind.

4. Miniatur-Elektromotor nach Anspruch 3, wobei die oder jede der normalen oder verzweigten Alkylgruppen Methyl, Ethyl, Propyl, Butyl, Pentyl, Hexyl, Heptyl, Octyl, Nonyl, Decyl, Dodecyl, Tetradecyl, Hexadecyl, Octadecyl, Icosanyl oder Triacontanyl ist, wobei die oder jede normale oder verzweigte Alkenylgruppe Decenyl oder Octadecenyl ist, die oder jede Cycloalkylgruppe ein Cyclohexyl ist und die oder jede Alkylcycloalkylgruppe ein 4-Methylcyclohexyl ist.

5. Miniatur-Elektromotor nach Anspruch 1, wobei das Diestercarbonat durch die folgende allgemeine Formel dargestellt ist: 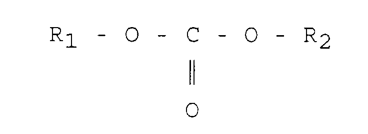 wobei die Gruppen R₁ und R₂ in der allgemeinen Formel unterschiedlich oder gleich sind und jeweils eine Butylgruppe, eine Isononylgruppe oder eine Isostearylgruppe darstellen.

6. Miniatur-Elektromotor nach Anspruch 1, wobei der atmosphärische Bestandteil oder die atmosphärischen Bestandteile mindestens eines der folgenden beinhaltet/beinhalten: Dibutylcarbonat, Diisononylcarbonat oder Diisostearylcarbonat.

7. Miniatur-Elektromotor nach einem, der vorhergehenden Ansprüche, wobei Dauermagnete (2) an einer inneren Umfangsfläche (11) eines Gehäuses (3) montiert sind, ein Rotor (4) drehbar in einem Inneren (21) des Gehäuses gelagert ist, und der Rotor den Kommutator (14) aufweist und die Bürsten (16) an dem Gehäuse (3) montiert sind.

8. Miniatur-Elektromotor nach Anspruch 7, wobei der atmosphärische Bestandteil oder die atmosphärischen Bestandteile (30) in Spaltabschnitte zwischen den Dauermagneten (2) und der inneren Umfangsfläche (11) des Gehäuses eingeblasen ist/sind, wodurch der atmosphärische Bestandteil oder die atmosphärischen Bestandteile (30) in dem Inneren (21) des Gehäuses abgeschlossen ist/sind.

9. Miniatur-Elektromotor nach Anspruch 7 oder 8, wobei der atmosphärische Bestandteil oder die atmosphärischen Bestandteile (30) in poröses Material imprägniert ist/sind und das poröse Material an einer beliebigen Stelle im Inneren (21) des Gehäuses angeordnet ist, wodurch im Inneren (21) des Gehäuses eine Atmosphäre des atmosphärischen Bestandteils oder der atmosphärischen Bestandteile beibehalten wird.

10. Miniatur-Elektromotor nach einem der Ansprüche 7 bis 9, wobei der atmosphärische Bestandteil oder die atmosphärischen Bestandteile in einem Spaltabschnitt zwischen mindestens zwei Komponenenten, ausgewählt aus den Dauermagneten (2), dem Gehäuse (3), dem Rotor (4), dem Kommutator (14), den Bürsten (16) und Lagereinheiten (6 und 7) zum Stützen des Rotors (4), eingeführt ist/sind oder diesen durchdringt/durchdringen, wodurch im Inneren (21) des Gehäuses eine Atmosphäre des atmosphärischen Bestandteils oder der atmosphärischen Bestandteile beibehalten wird.

11. Miniatur-Elektromotor nach einem der Ansprüche 7 bis 9, wobei der atmosphärische Bestandteil oder die atmosphärischen Bestandteile (30) direkt auf einen Gleitabschnitt (17) als Beschichtung aufgebracht ist/sind, wo die Bürsten (16) in Gleitkontakt mit dem Kommutator (14) sind, wodurch der Innenraum (21) des Gehäuses als Atmosphäre für den atmosphärischen Bestandteil beibehalten wird.

12. Elektromotor, welcher als Schmiermittel einen Kohlensäurediester enthält, welcher mindestens einen Molekülanteil der allgemeinen Formel 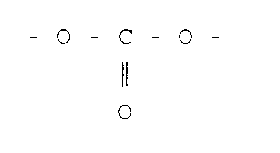 enthält.

13. Verwendung eines Kohlensäurediesters, welcher mindestens einen Molekülanteil der allgemeinen Formel 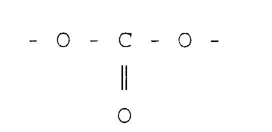 enthält, als Schmiermittel in einem Elektromotor.

## Revendications

1. Moteur électrique miniature dans lequel un collecteur (14) et des balais (16) sont en contact coulissant les uns avec les autres dans un carter de moteur (21),
au moins un agent constituant atmosphérique est scellé à l'intérieur (21) dudit carter, et caractérisé en ce que
ledit agent constituant atmosphérique est un diester d'acide carbonique contenant au moins une partie de la formule générale :

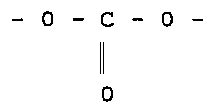

2. Moteur électrique miniature selon la revendication 1, dans lequel ledit diester d'acide carbonique est représenté par la formule générale suivante : 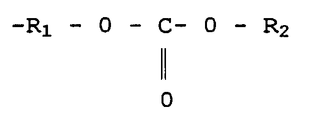 où les groupes R₁ et R₂ de la formule générale sont différents ou identiques, et chacun représente un alkyle C₁ à C₃₀ ou un alkényle C₂ à C₃₀.

3. Moteur électrique miniature selon la revendication 2, dans lequel les groupes R₁ et R₂ de la formule générale sont chacun indépendamment un alkyle normal, un alkényle normal, un alkyle ramifié, un alkényle ramifié, un cycloalkyle ou un alkylcycloalkyle.

4. Moteur électrique miniature selon la revendication 3, dans lequel le groupe alkyle normal ou ramifié, ou chaque groupe, est du méthyle, de l'éthyle, du propyle, du butyle, du pentyle, de l'hexyle, de l'heptyle, de l'octyle, du nonyle, du décyle, du dodécyle, du tétradécyle, de l'hexadécyle, de l'octadécyle, de l'icosanyle ou du triacontanyle, le groupe alkényle normal ou ramifié, ou chaque groupe, est du décényle ou de l'octadécényle, le groupe cycloalkyle, ou chaque groupe, est un cyclohexyle et le groupe alkylcycloalkyle, ou chaque groupe, est du 4-méthyl-cyclohexyle.

5. Moteur électrique miniature selon la revendication 1, dans lequel ledit carbonate de diester est représenté par la formule générale suivante : 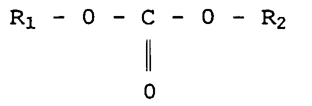 où les groupes R₁ et R₂ de la formule générale sont différents ou identiques, et chacun représente un groupe butyle, un groupe isononyle ou un groupe isostéaryle.

6. Moteur électrique miniature selon la revendication 1, dans lequel l'agent ou les agents constituants atmosphériques comportent au moins un élément parmi le carbonate de dibutyle, le carbonate de diisononyle, ou le carbonate de diisostéaryle.

7. Moteur électrique miniature selon l'une quelconque des revendications précédentes, dans lequel des aimants permanents (2) sont montés sur une surface circonférentielle intérieure (11) d'un carter (3), un rotor (4) est supporté de manière rotative dans l'intérieur (21) dudit carter, et ledit rotor comporte ledit collecteur (14) et lesdits balais (16) sont montés sur ledit carter (3).

8. Moteur électrique miniature selon la revendication 7, dans lequel l'agent ou les agents constituants atmosphériques (30) sont injectés dans des parties de vide existant entre lesdits aimants permanents (2) et ladite surface circonférentielle intérieure (11) du carter, de sorte que l'agent ou les agents constituants atmosphériques (30) soient scellés à l'intérieur (21) du carter.

9. Moteur électrique miniature selon la revendication 7 ou 8, dans lequel l'agent ou les agents constituants atmosphériques (30) sont imprégnés dans un matériau poreux, et le matériau poreux est disposé à un quelconque emplacement de l'intérieur (21) du carter, de sorte qu'une atmosphère constituée de l'agent ou des agents constituants atmosphériques est maintenue à l'intérieur (21) du carter.

10. Moteur électrique miniature selon l'une quelconque des revendications 7 à 9, dans lequel l'agent ou les agents constituants atmosphériques sont introduits ou pénètrent dans une partie de vide existant entre au moins deux éléments sélectionnés parmi les aimants permanents (2), le carter (3), le rotor (4), le collecteur (14), les balais (16), et les unités d'appui (6 et 7) destinées à supporter le rotor (4), de sorte qu'une atmosphère constituée de l'agent ou des agents constituants atmosphériques est maintenue à l'intérieur (21) du carter.

11. Moteur électrique miniature selon l'une quelconque des revendications 7 à 9, dans lequel l'agent ou les agents constituants atmosphériques (30) sont directement revêtus sur une partie coulissante (17) où les balais (16) sont en contact coulissant avec le collecteur (14), de sorte que l'espace de l'intérieur (21) du carter est maintenu en tant qu'atmosphère pour les agents constituants atmosphériques.

12. Moteur électrique contenant en tant que lubrifiant un diester d'acide carbonique, contenant au moins une partie de la formule générale :

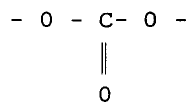

13. Utilisation en tant que lubrifiant dans un moteur électrique d'un diester d'acide carbonique, contenant au moins une partie de la formule générale :
